# EUROPÄISCHE PATENTSCHRIFT

(11) **EP 1 024 061 B1**
(45) Veröffentlichungstag und Bekanntmachung des Hinweises auf die Patenterteilung: **04.06.2003**
(21) Anmeldenummer: 00101246.7
(22) Anmeldetag: 25.01.2000
(51) Int. Cl.: B60R 21/20

(54) **Verbindung zwischen Generatorträger und Abdeckkappe in einem Airbagmodul**
Connection between inflator retainer and cover in an air bag module
Connection entre un support de gonfleur et un couvercle dans un module de coussin gonflable

(30) Priorität: 26.01.1999 DE 29901286 U
(43) Veröffentlichungstag der Anmeldung: 02.08.2000
(73) Patentinhaber: TRW Automotive Safety Systems GmbH & Co. KG, 63743 Aschaffenburg (DE)
(72) Erfinder: Krebs, Jürgen, 63743 Aschaffenburg (DE); BATHON, Michael, 63811 Stockstadt (DE); BIEBER, Udo, 63843 Niedernberg (DE); BURGARD, Jürgen, 63768 Hösbach (DE); KULLMANN, Kurt, 63843 Sulzbach (DE)
(74) Vertreter: Degwert, Hartmut, Dipl.-Phys.

(56) Entgegenhaltungen:
- EP-A- 0 648 649
- US-A- 5 520 411
- US-A- 5 692 773

## Beschreibung

Die Erfindung betrifft ein Airbag-Modul für die Anordnung in Kraftfahrzeuglenkrädern mit einem topfförmigen Generatorträger und einer deckelförmigen Abdeckkappe, wobei Generatorträger und Abdeckkappe randseitig miteinander verbunden sind und einen Aufnahmeraum für den Luftsack bilden.

Ein derartiges Airbag-Modul mit den Merkmalen entsprechend dem Oberbegriff des Anspruchs 1 ist in der US 5 692 773 A als zum Stand der Technik gehörend beschrieben.

Bei derartigen Airbag-Modulen müssen für die Ausgestaltung der Verbindung zwischen Generatorträger und Abdeckkappe verschiedene Randbedingungen berücksichtigt werden. Zum einen muß sichergestellt werden, daß die Verbindung allen bei der explosionsartigen Entfaltung des Gassacks auftretenden Kräften standhält, denn ein Loslösen von Teilen der Abdeckkappe oder der Abdeckkappe insgesamt, die bei einer unfallbedingten Aktivierung des Gassacks längs vorgegebener Linien aufreißt und aufklappt, muß im Hinblick auf die damit verbundenc Verletzungsgefahr unbedingt vermieden werden. Die Ausgestaltung der Verbindung wird dadurch erschwert, daß diese Kräfte nicht nur in Richtung der Entfaltung des Gassacks, sondern kurzfristig auch in Gegenrichtung wirksam sind.

Ferner ist zu beachten, daß die Abdeckkappe eines Airbag-Moduls meist als Betätigungsorgan für die Fahrzeughupe ausgelegt ist und dazu gegen eine Rückstellkraft etwa parallel zur Lenkradachse um mindestens den Kontaktabstand relativ zum Lenkrad beweglich angeordnet ist. Bei der Verbindung zwischen Abdeckkappe und Generatorträger muß dafür gesorgt werden, daß diese Teile relativ zueinander unbeweglich miteinander befestigt sind, damit die Hupfunktion bzw. der in engen Grenzen einzustellende Kontaktabstand eingehalten bzw. gewährleistet werden können.

Schließlich soll die Verbindung zwischen Abdeckkappe und Generatorträger im Hinblick auf eine kostengünstige Montage möglichst einfach ausgebildet und vorzugsweise ohne irgendwelche Werkzeuge herstellbar sein.

Die bekannt gewordenen Verbindungen zwischen Abdeckkappe und Generatorträger erfüllen die vorgenannten Forderungen nicht immer alle optimal, so daß man ständig bestrebt ist, diese Verbindungen weiter zu verbessern. Hinzu kommt, daß Kraftfahrzeuglenkräder ebenfalls ständig weiterentwickelt werden, was dazu führen kann, daß herkömmliche Befestigungsmethoden nicht mehr anwendbar sind und daher ebenfalls abgewandelt werden müssen.

Der Erfindung liegt die Aufgabe zugrunde, für ein Airbag-Modul der eingangs genannten Art die Bauteile Generatorträger und Abdeckkappe so zu gestalten und aufeinander abzustimmen, daß eine verbesserte, einfache, allen funktionalen Anforderungen genügende Verbindung zwischen diesen beiden Teilen erreicht werden kann, bei der insbesondere auch die Forderung nach einer kurzen Montagezeit optimal erfüllt werden kann.

Die erfindungsgemäß vorgeschlagene Lösung ist im Anspruch 1 definiert.

Der Generatorträger Besteht aus einem umgeformten Blechabschnitt mit einer im wesentlichen parallel zur Lenkradachse ausgerichteten Seitenwand, die am Umfang verteilt, wenigstens zwei Befestigungsbereiche aufweist, die jeweils
- mindestens eine am oberen Rand der Seitenwand nach außen abgewinkelte Verlängerung,
- einen in der Seitenwand darunter angeordneten, rechteckigen Fensterausschnitt sowie
- eine durch seitliches Freischneiden erzeugte, unterhalb des Fensterausschnitts mit der Seitenwand verbundene Biegelasche umfassen; die Abdeckkappe besteht aus Kunststoff und weist eine umlaufende, außen an der Seitenwand des Generatorträgers anliegende Seitenwand mit vertikalen Schlitzen auf, die je Befestigungsbereich
- eine radial durchgehende Ausnehmung für den Eingriff der Verlängerung sowie
- einen radial nach innen gerichteten, einstückig angeformten Vorsprung besitzt, der sich in montiertem Zustand auf dem unteren Rand des Fensterausschnitts der Seitenwand abstützt, wobei die Biegelasche in montiertem Zustand nach oben umgebogen ist und außen an der Seitenwand der Abdeckkappe anliegt.

Bei der vorgeschlagenen Lösung wird davon ausgegangen, daß eine ausreichende gegenseitige Positionierung und Fixierung von Generatorträger und Abdeckkappe in einer Ebene senkrecht zur Lenkradachse erreicht werden kann, wenn am Generatorträger und an der Abdeckkappe zueinander korrespondierende und konzentrisch aneinander anliegende Wandbereiche vorgesehen werden, die zusammenwirkend bereits eine betriebssichere, zweidimensionale Befestigung ergeben und lediglich noch durch eine exakte Festlegung beider Teile relativ zueinander in Richtung der Lenkradachse erfordern.

Dabei ist die zur Lenkradachse parallele Wand der Abdeckkappe durch Längsschnitte in Bereiche unterteilt, die elastisch soweit nach außen spreitzbar sind, daß sie ohne weiteres über die nach außen abgewinkelten Verlängerungen des Generatorträgers geschoben werden können. Nach dem Einrasten dieser Verlängerungen in die Ausnehmungen der Abdeckkappe wird die so geschaffene Verbindung durch Umbiegen der Biegelaschen nach oben gesichert. Gleichzeitig sorgen die radial nach innen gerichteten Vorsprünge, die einstückig an der Seitenwand der Abdeckkappe angeformt sind und sich in montiertem Zustand auf dem unteren Rand der Fensterausschnitte in der Seitenwand des Generatorträgers abstützen, dafür daß die Verbindung in Richtung Lenkradachse spielfrei ist, so daß weder der eingestellte Kontaktabstand noch die Hupfunktion beeinträchtigt werden.

Vorteilhafte Ausgestaltungen des Erfindungsgedankens sind in den Unteransprüchen 2 bis 5 beschrieben. Weitere Einzelheiten werden anhand des in den Figuren 1 bis 4 dargestellten Ausführungsbeispiels näher erläutert. Es zeigen:
Fig. 1 einen Teil eines Generatorträgers in Ansicht und Schnitt
Fig. 2 einen Teil des Generatorträgers und der Abdeckkappe in Ansicht und Schnitt
Fig. 3 den Schnitt gemäß Fig. 2 nach erfolgtem Hochbiegen der Biegelasche
Fig. 4 einen Schnitt durch die Abdeckkappe

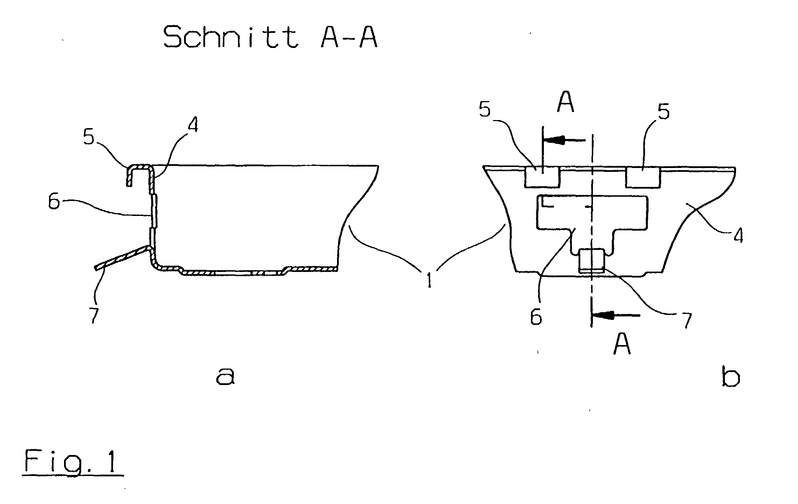

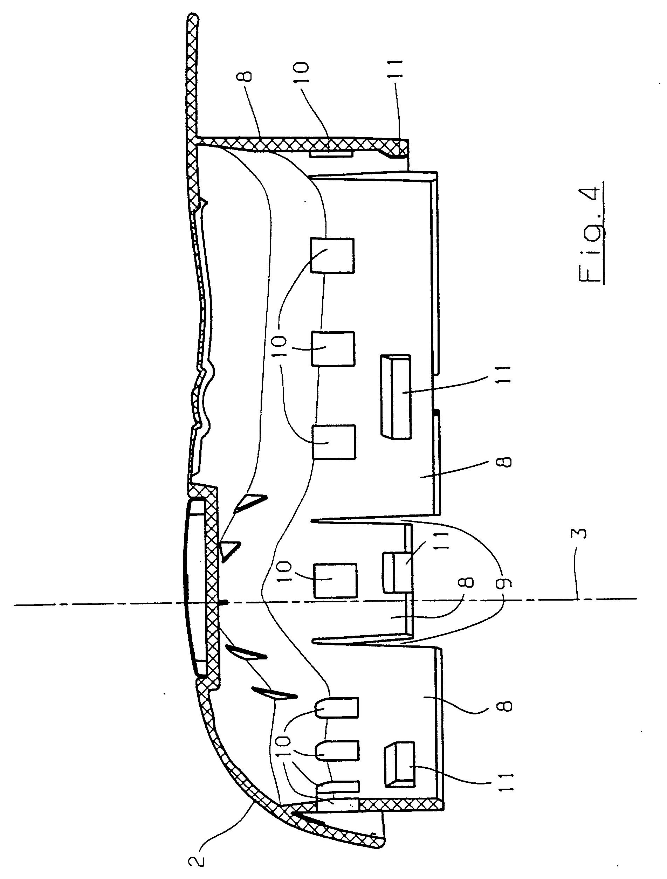

Der Generatorträger (1) gemäß Fig. 1a und 1b besteht aus einem topfförmig umgeformten Blechabschnitt, dessen Seitenwand (4) im wesentlichen parallel zur Lenkradachse (3) (vergleiche Fig. 4) ausgerichtet ist. Am Umfang der Seitenwand (4) sind mehrere, zumindest aber zwei Befestigungsbereiche vorgesehen, die jeweils eine am oberen Rand der Seitenwand (4) nach außen abgewinkelte Verlängerung (5), einen in der Seitenwand (4) darunter angeordneten, rechteckigen Fensterausschnitt (6) sowie eine durch seitliches Freischneiden erzeugte, unterhalb des Fensterausschnittes (6) mit der Seitenwand (4) verbundene Biegelasche (7) umfassen. Bei der Ausbildung der Befestigungsbereiche werden übliche, aus der Blechverarbeitung bekannte Stanzund Biegevorrichtungen verwendet.

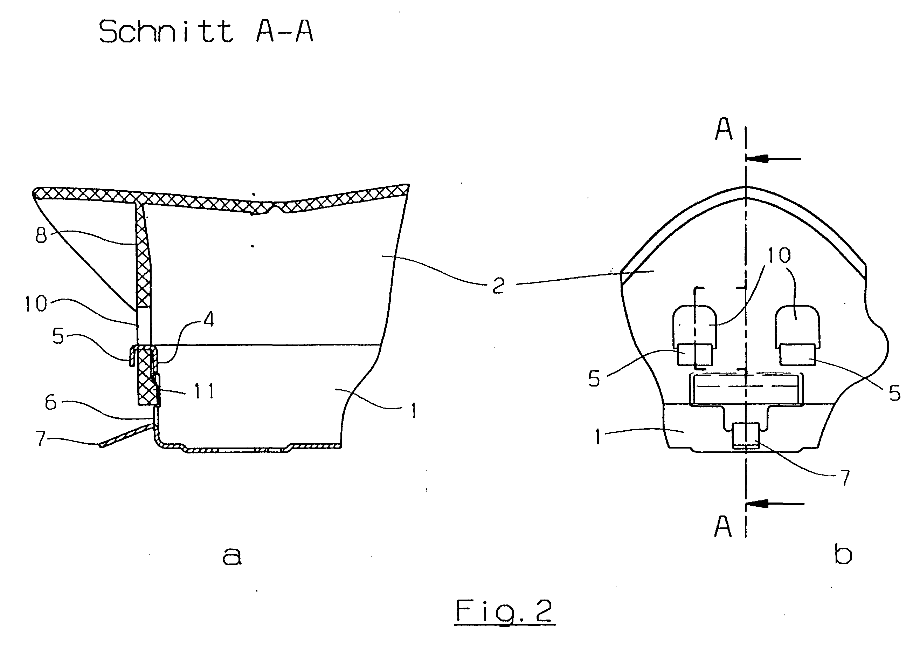

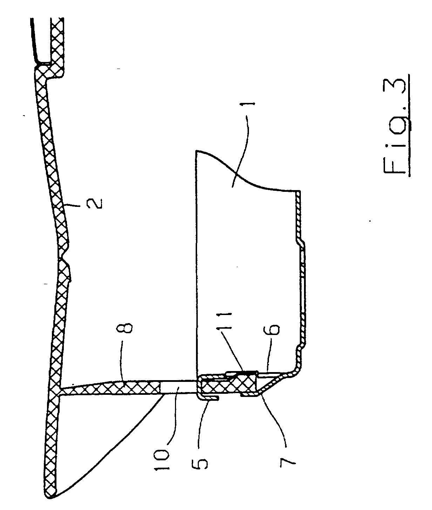

Die in Fig. 2a und 2b dargestellte Abdeckkappe (2) besteht aus Kunststoff und weist eine umlaufende, außen an der Seitenwand (4) des Generatorträgers (1) anliegende Seitenwand (8) mit vertikalen Schlitzen (9) auf. Korrespondierend zu den abgewinkelten Verlängerungen (5) am Generatorträgers (1) sind in der Seitenwand (8) der Abdeckkappe (2) radial durchgehende Ausnehmungen (10) vorgesehen, in die die Verlängerungen 5 bei der Montage eingreifen können. Außerdem besitzt die Seitenwand (8) der Abdeckkappe (2) für jeden Befestigungsbereich einen radial nach innen gerichteten, einstückig angeformten Vorsprung (11), der sich in montiertem Zustand auf dem unteren Rand des Fensterausschnitts (6) der Seitenwand (4) abstützt. Auf diese Weise ist bereits die erforderliche gegenseitige Fixierung von Abdeckkappe (2) und Generatorträger (1) geschaffen. Durch das Umlegen der Biegelaschen (7) nach oben - wie aus Fig. 3 ersichtlich - wird diese Verbindung zusätzlich gesichert und spielfrei gemacht.

Fig. 4 zeigt einen Schnitt durch eine Abdeckkappe gemäß der Erfindung, wobei mit 2 die Abdeckkappe und mit 3 die Lenkradachse bezeichnet sind. Die radial durchgehenden Ausnehmungen 10 und die radial nach innen gerichteten, einstückig angeformten Vorsprünge 11 sind in Umfangsrichtung der Seitenwand 8 so verteilt, daß überall eine zuverlässige Verbindung zwischen Abdeckkappe 2 und Generatorträger 1 erreicht werden kann. Die Seitenwand 8 ist durch vertikale, d.h. etwa parallel zur Lenkradachse geführte Schlitze 9 in einzelne Bereiche unterteilt, um das notwendige Aufspreitzen bei der Montage zu erleichtern. Dargestellt sind ferner unterschiedlich lange Bereiche der Seitenwand 8. Die kürzeren Bereiche erstrecken sich nur bis zur Unterkante der Vorsprünge 11, während die anderen Bereiche deutlich länger ausgeführt sind. Insoweit handelt es sich jedoch nur um eine Anpassung an örtliche Gegebenheiten und nicht um eine erfindungswesentliche Maßnahme. Hieraus ergibt sich aber, daß in der Seitenwand 8 der Abdeckkappe 2 durchaus auch andere Aussparungen vorgesehen werden können, wenn die Einbauverhältnisse dies erfordern und die verbleibenden Bereiche der Seitenwand 8 eine ausreichende Fixierung in einer Ebene senkrecht zur Lenkradachse gewährleisten. Gleichermaßen kann auch die Seitenwand 4 des Generatorträgers Aussparungen aufweisen. Es muß nur sichergestellt sein, daß in jedem Fall sowohl am Generatorträger 1 und an der Abdeckkappe 2 so viele Seitenwandbereiche vorhanden sind, daß die gewünschte Festlegung senkrecht zur Lenkradachse unter allen Umständen gewährleistet ist.

## Patentansprüche

1. Airbag-Modul für die Anordnung in Kraftfahrzeuglenkrädern, mit einem topfförmigen Generatorträger (1) und einer deckelförmigen Abdeckkappe (2), wobei der Generatorträger (1) und Abdeckkappe (2) randseitig miteinander verbunden sind und einen Aufnahmeraum für einen Luftsack bilden, wobei der Generatorträger (1) aus einem umgeformten Blechabschnitt mit einer im wesentlichen parallel zur Lenkradachse (3) ausgerichteten Seitenwand (4) besteht, die am Umfang verteilt, wenigstens zwei Befestigungsbereiche aufweist, die jeweils mindestens eine am oberen Rand der Seitenwand (4) nach außen abgewinkelte Verlängerung (5) umfassen, und wobei die Abdeckkappe (2) aus Kunststoff besteht und eine umlaufende, außen an der Seitenwand (4) des Generatorträgers (1) anliegende Seitenwand (8) aufweist, **dadurch gekennzeichnet, daß** die Befestigungsbereiche
- einen in der Seitenwand (4) unter der nach außen abgewinkelten Verlängerung (5) angeordneten, rechteckigen Fensterausschnitt (6) sowie
- eine durch seitliches Freischneiden erzeugte, unterhalb des Fensterausschnitts (6) mit der Seitenwand (4) verbundene Biegelasche (7) umfassen,
und daß die Seiten wand (8) der Abdeckkappe (2) vertikale Schlitze (9) aufweist, und je Befestigungsbereich
- eine radial durchgehende Ausnehmung (10) für den Eingriff der Verlängerung (5) sowie
- einen radial nach innen gerichteten, einstückig angeformten Vorsprung (11) besitzt, der sich in montiertem Zustand auf dem unteren Rand des Fensterausschnitts (6) der Seitenwand (4) abstützt,
wobei die Biegelasche (7) in montiertem Zustand nach oben umgebogen ist und außen an der Seitenwand (8) der Abdeckkappe (2) anliegt.

2. Airbag-Modul nach Anspruch 1, **dadurch gekennzeichnet, daß** die Seitenwand (8) der Abdeckkappe (2) durch die Schlitze (9) in wenigstens zwei Bereiche unterteilt ist, von denen jeder wenigstens eine Befestigungsstelle aufweist.

3. Airbag-Modul nach Anspruch 2, **dadurch gekennzeichnet, daß** die Seitenwand (8) der Abdeckkappe (2) schmale Bereiche (12) mit nur einer Befestigungsstelle und breite Bereiche (13) mit wenigstens einer Befestigungsstelle aufweist.

4. Airbag-Modul nach einem der Ansprüche 1 bis 3, **dadurch gekennzeichnet, daß** die radial durchgehenden Ausnehmungen (10) in der Seitenwand (8) der Abdeckkappe (2) rechteckig ausgebildet und in Breite und Höhe auf die Verlängerungen (5) abgestimmt sind.

5. Airbag-Modul nach Anspruch 4, **dadurch gekennzeichnet, daß** die Verlängerungen (5) endseitig hakenförmig nach unten abgewinkelt sind (14), wobei die Höhe der Abwinkelung (14) kleiner ist, als die Höhe der Ausnehmung (10).

## Claims

1. An airbag module for arrangement in motor vehicle steering wheels, comprising a cup-shaped generator carrier (1) and a lid-shaped covering cap (2), the generator carrier (1) and the covering cap (2) being connected with each other at the rim and forming an accommodation space for an airbag, the generator carrier (1) consisting of a shaped sheet metal section having a side wall (4) which is oriented substantially parallel to the steering wheel axis (3) and has at least two fastening regions distributed on the periphery which each comprise at least one extension (5) angled outwardly at the upper edge of the side wall (4), and the covering cap (2) consisting of plastic and having a surrounding side wall (8) resting against the outside of the side wall (4) of the generator carrier (1), **characterized in that** the fastening regions comprise
- a rectangular window cut-out (6) arranged in the side wall (4) beneath the outwardly angled extension (5), and
- a bending tongue (7) produced by punching from the side and connected with the side wall (4) beneath the window cut-out (6),
and that the side wall (8) of the covering cap (2) has vertical slits (9) and, for each fastening region, has
- a radially continuous recess (10) for engagement by the extension (5), and
- a radially inwardly directed, integrally moulded projection (11) which in the fitted condition is supported on the lower edge of the window cut-out (6) of the side wall (4),
the bending tongue (7) in the fitted condition being bent upwards and resting against the outside of the side wall (8) of the covering cap (2).

2. The airbag module according to Claim 1, **characterized in that** the side wall (8) of the covering cap (2) is divided by the slits (9) into at least two regions, each of which has at least one fastening point.

3. The airbag module according to Claim 2, **characterized in that** the side wall (8) of the covering cap (2) has narrow regions (12) with only one fastening point and wide regions (13) with at least one fastening point.

4. The airbag module according to any of Claims 1 to 3, **characterized in that** the radially continuous recesses (10) in the side wall (8) of the covering cap (2) are made to be rectangular and are adapted in width and height to the extensions (5).

5. The airbag module according to Claim 4, **characterized in that** at their ends, the extensions (5) are angled downwards in a hook shape (14), the height of the angled portion (14) being smaller than the height of the recess (10).

## Revendications

1. Module d'airbag destiné à être agencé dans des volants de véhicules, comportant un support de générateur (1) en forme de pot et un capuchon de recouvrement (2) en forme de couvercle, le support de générateur (1) et le capuchon étant reliés l'un à l'autre sur les bords et formant un espace de réception pour un coussin à gaz, le support de générateur (1) étant constitué par un tronçon de tôle façonné avec une paroi latérale (4) qui est orientée de manière sensiblement parallèle à l'axe du volant (3) et qui présente au moins deux zones de fixation réparties sur la périphérie, lesquelles comprennent au moins un prolongement (5) coudé vers l'extrémité sur le bord supérieur de la paroi latérale (4), et le capuchon de recouvrement (2) étant constitué en matière plastique et présentant une paroi latérale (8) périphérique et en appui sur l'extérieur de la paroi latérale (4) du support de générateur (1), **caractérisé en ce que** les zones de fixation comprennent
- une ouverture de fenêtre (6) rectangulaire agencée dans la paroi latérale (4) au-dessous du prolongement (5) coudé vers l'extérieur, ainsi que
- une languette de flexion (7) produite par découpage latéral et reliée à la paroi latérale (4) au-dessous de l'ouverture de fenêtre (6),
et **en ce que** la paroi latérale (8) du capuchon de recouvrement (2) présente des fentes (9) verticales et possède, pour chaque région de fixation,
- un évidement (10) continu radial pour l'engagement du prolongement (5) ainsi que
- une saillie (11) formée d'un seul tenant et orientée radialement vers l'intérieur, qui, à l'état monté, prend appui sur le bord inférieur de l'ouverture de fenêtre (6) de la paroi latérale (4), la languette de flexion (7) étant, à l'état monté, recourbée vers le haut et en appui sur l'extérieur de la paroi latérale (8) du capuchon de recouvrement (2).

2. Module d'airbag selon la revendication 1, **caractérisé en ce que** la paroi latérale (8) du capuchon de recouvrement (2) est subdivisé par les fentes (9) en au moins deux zones dont chacune présente au moins un point de fixation.

3. Module d'airbag selon la revendication 2, **caractérisé en ce que** la paroi latérale (8) du capuchon de recouvrement (2) présente des zones étroites (12) avec un seul point de fixation et des zones larges (13) avec au moins un point de fixation.

4. Module d'airbag selon l'une des revendications 1 à 3, **caractérisé en ce que** les évidements (10) radialement continus dans la paroi latérale (8) du capuchon de recouvrement (2) sont réalisés rectangulaires et sont adaptés à la largeur et à la hauteur des prolongements (5).

5. Module d'airbag selon la revendication 4, **caractérisé en ce que** les prolongements (5) sont coudés vers le bas en forme de crochets (14), la hauteur du coudage (14) étant plus petite que la hauteur de l'évidement (10)
